# EUROPÄISCHE PATENTANMELDUNG

(11) **EP 0 603 607 A1**
(43) Veröffentlichungstag der Anmeldung: **29.06.1994**
(21) Anmeldenummer: 93119501.0
(22) Anmeldetag: 03.12.1993
(51) Int. Cl.: B09B 3/00

(54) **Verfahren zur mikrobiologischen Reinigung ton-, schluff- und feinkornhaltiger Materialien unter Zuhilfenahme bestimmter Auflockerungsmittel**

(30) Priorität: 23.12.1992 IE 922947
(71) Anmelder: H.P. Chemie Pelzer Research & Development Ltd., Tramore, County Waterford (IE)
(72) Erfinder: Pelzer, Helmut, Dipl.-Ing., D-58313 Herdecke-Ende (DE); Bopp, Michael H., D-58455 Witten (DE)
(74) Vertreter: Jönsson, Hans-Peter, Dr.Dipl.-Chem.

(57) **Zusammenfassung**

Die Erfindung bezieht sich auf ein Verfahren zur mikrobiologischen Reinigung von Materialien, die gewöhnlichen oder groben Ton und feinkörnige Materialien enthalten unter Zuhilfenahme von Auflockerungsmitteln, die nach Ablauf der Reinigung wieder zurückgewonnen und nach entsprechender Vorbehandlung wieder für weitere Reinigungsprozesse verwendet werden können, wozu Auflockerungsmittel verwendet werden, die keinem oder nur sehr geringem mikrobiologischen Angriff und Abbau zugänglich sind, aus verfahrenstechnischen Gründen eine möglichst große spezifische Oberfläche haben, leicht sind um im Schwimm-Sink-Verfahren leicht abtrennbar zu sein, eine steuerbare Mikroporosität besitzen, die sicherstellt, daß nur geringe Wassermengen oder Feinkornanteile aufgenommen werden können und dennoch die zum Abbau fähigen Mikroorganismen im immoblisierten Zustand angesiedelt werden können.

## Beschreibung

Gegenstand der vorliegenden Erfindung ist ein Verfahren zur mikrobiologischen Reinigung ton-, schluff- und feinkornhaltiger Materialien unter Zuhilfenahme von Auflockerungsmitteln, die nach Ablauf der Reinigung wieder zurückgewonnen und nach entsprechender Vorbehandlung wieder für weitere Reinigungsprozesse verwendet werden können.

Materialien der eingangs genannten Art sind mit sogenannten perkolativen Verfahren nicht zu behandeln weil die Wasserpermeabilität oder -gängigkeit nur sehr gering ist. Aus diesem Grunde werden zum Erzielen der Gängigkeit Auflockerungsmittel wie Rindenmulch, Sägespäne Strohhäcksel oder dergleichen zugesetzt. Diese Zusätze verrotten zwar bei mikrobiologischen Prozessen und können so in den natürlichen Kreislauf zurückgegeben werden, mit ihrer Verwendung ist aber der Nachteil verbunden, daß die zu behandelnden Volumina erheblich zunehmen und dadurch nach Abschluß der Reinigung die zu deponierende oder wieder einzubauende Menge an Material stets größer ist als die eingangs vorliegende Menge des zu behandelnden Materials.

Man ist deshalb bestrebt, verfahrensinterne Auflockerungsmittel einzusetzen, die nach Ablauf der Reinigung wieder zurückgewonnen werden können und nach entsprechender Vorbehandlung wieder für weitere Reingungsprozesse verwendet werden können.

Es ist weiterhin bekannt, daß durch die Eigenart mikrobiologischer Prozesse bei der Reinigung die Abbaufähigkeit spezifischer Mikroorganismen durch Verfügbarkeit von leichter zugänglichen C-Quellen negative Auswirkungen unterliegen kann. Es kommt dann beim Abbau zu zeitlich bedeutenden "Ruhepausen" in denen der gewünschte Abbau der Schadstoffe unterbrochen wird. Statt dessen werden die Auflockerungsmittel mikrobiologisch abgebaut, verlieren dabei ihre physikalische Konstitution und wirken deswegen nicht mehr auflockernd. Dadurch verstopft das System, eine Sauerstoff- und Nährstoffversorgung ist nicht mehr möglich und das System kommt zum Stillstand. Der Abbauprozess kann dann nur durch erneuerte Auflockerung und Reaktivierung fortgesetzt werden. Dies ist eine zeit- und kostenmäßig sehr nachteilige Prozedur bei der der Abbau nicht wie gewünscht stattfindet.

Ander Verfahren weichen daher auf Bioreaktoren aus, die ausschließlich in der Dispersionsphase arbeiten. Fein- und feinstkornhaltige Materialien werden in geeigneten Reaktoren, z.B. Rollreaktoren, mit großen Mengen Wasser zu Dispersionen oder Schlämmen versetzt und der Schadstoffabbau wird durch ständige Bewegung unter Zufuhr von Sauerstoff und Nährsalzen bewerkstelligt. Es zeigt sich aber, daß dieses Verfahren zwar in der Lage ist, die gewünschten Bedingungen für eine mikrobiologische Behandlung zu erfüllen, der Energieeinsatz, die Durchsatzmenge und ander Kostenparameter lasse jedoch Zweifel an der Wirtschaftlichkeit solcher Verfahren zu. Sie eignen sich jedoch zur Anwendung bei in der Regel schwierig abbaubaren polyzyklischen aromatischen Kohlenwasserstoffen (PAK) und hier besonders für solche mit Kernanteilen >4. Nach heutigen Erkenntnissen sind solche Materialien nur durch oxidativen Vorabbau mit z.B. O₃ oder H₂O₂/O₃ - Technologien dem mikrobiologischen Abbau zugänglich und müssen daher zuvor einer entsprechenden Behandlung unterworfen werden. Die Oxidation erfolgt vorteilhaft in der flüssigen odr schlammigen Phase. In geschlossenen Systemen ist dadurch auch der Umgang mit dem giftigen Ozon sicher zu handhaben und durch entsprechende Ablufttechnologien eine Luftkontamination zu vermeiden. Da durch die Oxidation jedoch auch die mikrobiologische Flora erheblich reduziert oder völlig vernichtet wird, muß für die weitere Behandlung eine entsprechend adaptierte Mikroorganismenpopulation zugesetzt werden, die den erforderlichen Schadstoffabbau durchführt. Erfolgt dann der weitere Verfahrensablauf wie vorstehend geschildert, gelten die gleichen Einschränkungen hinsichtlich Wirtschaftlichkeit und Erfolgsaussichten.

Ausgehend von diesem Stand der Technik ist es Aufgabe der vorliegenden Erfindung ein Verfahren zur mikrobiologischen Reinigung ton-, schluff- und feinkornhaltiger Materialien unter Zuhilfenahme von Auflockerungsmitteln anzugeben, die nach Ablauf der Reinigung wieder zurückgewonnen und nach entsprechender Vorbehandlung wieder für weitere Reinigungsprozesse verwendet werden können.

Die Lösung dieser Aufgabe erfolgt erfindungsgemäß dadurch, daß Auflockerungsmittel verwendet werden, die: keinem oder nur sehr geringem mikrobiologischen Angriff und Abbau zugänglich sind,
aus verfahrenstechnischen Gründen eine möglichst große spezifische Oberfläche haben,
leicht sind um im Schwimm-Sink-Verfahren leicht abtrennbar zu sein,
eine steuerbare Mikroporosität besitzen, die sicherstellt, daß nur geringe Wassermengen oder Feinkornanteile aufgenommen werden können und dennoch die zum Abbau fähigen Mikroorganismen im immobilisierten Zustand angesiedelt werden können. Mit besonderem Vorteil werden dazu als Auflockerungsmittel in für den Einsatzzweck und notwendige Korngrößenverteilung zerkleinerte Polyformaldehydschäume (PF), und/oder polyolefine Schäume (PP/PE), vor zugsweise aber Polyurethanschäume (PUR) verwendet werden.

Der besondere Vorteil der erfindungsgemäß zu verwendenden Auflockerungsmittel sind darin zu sehen, daß die genannten Schäume schon teilweise aus Recyclingverfahren (Kühlschränke, Isolationen) zur Verfügung stehen. Am vorteilhftesten ist aber die Verwendung von PUR. Durch die hohe Variabilität in der Rezepturgestaltung, der guten Verfügbarkeit, der individuell einstellbaren Dichte, der Möglichkeit zur Inkorporation spezifischer Füllstoffe und Agenzien bietet PUR günstige Anpassungsmöglichkeiten. Auch die Wiederverwertung nach Gebrauch in mikrobiologischen Verfahren und nach Vorreinigung wird durch die Möglichkeitder Anwendung der Glykolyse oder Alkoholyse begünstigt da derartig gewonnene Polyole wieder als Ausgagnsstofffe für PUR-Schäume einsetzbar sind.

Eine an sich denkbare Mischung der oben genannten Schäume sollte auf Fälle mit außerordentlichen Verfahrensvorteilen beschränkt werden weil eine selektive Abtrennung der Mischung nicht ohne weiteres möglich und damit die Recyclingmöglichkeit für PUR stark eingeschränkt ist.

Eine bevorzugte Ausführungsform des erfindungsgemäßen Verfahrens läuft wie folgt ab:
Nach Feststellung der Zusammensetzung des zu behandelnden Materials mit hohen Feinkornanteilen und der Definition der abzubauenden Schadstoffe wird zunächst in einem geigneten Mischer aus dem Material und zuvor ermittelten notwendigen Menge Prozesswasser eine Schlammdispersion hergestellt aus der eventuell vorhandene Schweranteile wie Steine oder andere grobformatige Einlagerungen durch Klassierung abgetrennt werden können. Durch Abluftbehandlung können flüchtige Bestandteile in dieser Prozessphase physikalisch/chemisch oder mikrobiologisch weiterbehandelt werden und damit sichergestellt werden, daß keine Luftkontamination erfolgt. Falls aus Gründen der Schadstoffzusammensetzung notwendig, kann die Schlammdispersion nunmehr in geeigneten Reaktoren einer zusätzlichen chemischen oder chemisch/ physikalischen Vorbehandlung unterworfen werden, die durch geschlossenen Prozessweise sicher gestaltet werden kann. Hier ist besonders die vorher schon erwähnte oxidative Vorbehandlung mit O₃ oder H₂O₂ zum Abbau von mehrkernigen PAK's gemeint.

Entstehende Abluft kann durch Adsorptions-, Desorptions-, thermische- oder mikrobiologische Verfahren nachbehandelt werden, deren Art und Menge sich nach derjeweiligen Kontamination richtet.

In einem weiteren Verfahrensschritt wird die Schlammdispersion nach analytischer Prüfung mit dem gegebenenfalls mikrobiologisch vorbehandelten Auflockerungsmittel gemischt. In einem Mischer wird dem Auflockerungsmittel über eine Zeitspanne solange Schlammdispersion zugesetzt bis eine feuchte aber noch rieselfähige, Hohlräume bildende Masse entsteht. Diese kann sowohl diskontinuierlich als auch kontinuierlich erzeugt werden. Die Masse wird zur weiteren mikrobiologischen Behandlung zu Beeten oder Mieten aufgeschüttet. Je nach Prozesserfordernis kann eine Belüftung, Bewässerung oder Heizung vorgesehen werden.
Nach der mikrobiologischen Behandlung wird die mit dem Auflockerungsmittel versetzte Masse in einer Mischvorrichtung mit soviel Prozesswasser versetzt, daß eine Reinigung des Auflockerungsmittels von anhaftenden Fein- und Feinstkornanteilen in turbulenter Strömung erfolgt. Das aufschwimmende Auflockerungsmittel wird entfernt, der verbleibende Schlamm entwässert und zur Deponie oder Aufschüttung verbracht. Dieser Prozess kann wiederholt werden. Zur Behandlung des Prozesswassers können Membran- oder Ultrafiltrationen verwendet werden, sodaß nur geringe Mengen Frischwasser zur Reinigung benötigt werden.

Ein besonderer Vorteil dieses Verfahrens ist darin zu sehen, daß die Auflockerungsmittel mit schadstoffabbauenden Mikroorganismen vorbehandelt sind. Dadurch setzt bereits nach kurzer Zeit ein Schadstoffabbau ein und die Dekontaminationszeit wird kurz gehalten.

Nach Abbau des Schadstoffes wird zur Entfernung des leicht aufschwimmenden Auflockerungsmittels dieses in einer Wasser/Feststoff-Dispersion im Schwimm- Sink-oder anderem Trennverfahren entfernt und steht nach Reinigung oder einem chemischen Recyclingverfahren wieder zur Verfügung.

## Patentansprüche

1. Verfahren zur mikrobiologischen Reinigung ton-, schluff- und feinkornhaltiger Materialien unter Zuhilfenahme von Auflockerungsmitteln, die nach Ablauf der Reinigung wieder zurückgewonnen und nach entsprechender Vorbehandlung wieder für weitere Reinigungsprozesse verwendet werden können,
dadurch gekennzeichnet,
daß Auflockerungsmittel verwendet werden, die:
keinem oder nur sehr geringem mikrobiologischen Angriff und Abbau zugänglich sind,
aus verfahrenstechnischen Gründen eine möglichst große spezifische Oberfläche haben,
leicht sind um im Schwimm-Sink-Verfahren leicht abtrennbar zu sein,
eine steuerbare Mikroporosität besitzen, die sicherstellt, daß nur geringe Wassermengen oder Feinkornanteile aufgenommen werden können und dennoch die zum Abbau fähigen Mikroorganismen im immobilisierten Zustand angesiedelt werden können.

2. Verfahren nach Anspruch 1,
dadurch gekennzeichnet,
daß als Auflockerungsmittel in für den Einsatzzweck und notwendige Korngrößenverteilung zerkleinerte Polyformaldehydschäume, und/oder polyolefine Schäume, vorzugsweise aber Polyurethanschäume verwendet werden.

3. Verfahren zur mikrobiologischen Reinigung ton-, schluff- und feinkornhaltiger Materialien unter Zuhilfenahme von Auflockerungsmitteln nach Anspruch 1 oder 2,
dadurch gekennzeichnet,
daß in einem ersten Verfahrensschritt aus dem zu behandelnden Material mit hohem Feinkornanteil in einem geeigneten Mischer und Prozesswasser eine Schlammdispersion erzeugt wird und in einem zweiten Verfahrensschritt dem Auflockerungsmittel in einem geeigneten Mischer solange Schlammdispersion zugesetzt wird, bis eine feuchte aber noch rieselfähige, Hohlräume bildende Masse entanden ist, die zur weiteren mikrobiologischen Behandlung zu Beeten oder Mieten aufgeschüttet wird.

4. Verfahren nach Anspruch 3
dadurch gekennzeichnet,
daß während der Erzeugung der Schlammdispersion vorhandene Schweranteile wie Steine oder andere grobformatige Einlagerungen abgetrennt werden.

5. Verfahren nach Anspruch 3
dadurch gekennzeichnet,
daß während der Erzeugung der Schlammdispersion eine Abluftbehandlung stattfindet, durch die flüchtige Bestandteile physikalisch/chemisch oder mikrobiologisch weiterbehandelt werden.

6. Verfahren nach Anspruch 3 bis 5 oder einem derselben,
dadurch gekennzeichnet,
daß die Schlammdispersion in einem Reaktor einer zusätzlichen chemischen oder chemisch/physikalischen Behandlung unterzogen wird.

7. Verfahren nach Anspruch 6,
dadurch gekennzeichnet,
daß eine Behandlung mit O₃ oder H₂O₂ erfolgt.

8. Verfahren nach Anspruch 6 oder 7,
dadurch gekennzeichnet,
daß bei der Behandlung entstehende Ablauft durch Adsorptions-, Desorptions-, thermische- oder mikrobiologische Verfahren nachbehandelt wird.

9. Verfahren nach Anspruch 3 bis 8 oder einem derselben,
dadurch gekennzeichnet,
daß nach der mikrobiologischen Behandlung die mit dem Auflokkerungsmittel versetzte Masse in einer Mischvorrichtung mit soviel Prozesswasser versetzt wird, daß eine Reinigung des Auflockerungsmittels von anhaftenden Fein- und Feinstkornanteilen in turbulenter Strömung erfolgt und das aufschwimmende Auflockerungsmittel entfernt wird.

10. Verfahren nach Anspruch 9,
dadurch gekennzeichnet, daß das Prozesswasser mit Membran- oder Ultrafilterationen behandelt wird.
